# EUROPEAN PATENT APPLICATION

(11) **EP 3 594 011 A1**
(43) Date of publication of application: **15.01.2020**
(21) Application number: 18182991.2
(22) Date of filing: 11.07.2018
(51) Int. Cl.: B42D 25/29, H04L 9/32, G06Q 20/06, G06Q 20/38, G06K 7/14, G06K 19/10

(54) **SECURE COLD STORAGE MEDIUM**

(71) Applicant: Youniqx Identity AG, 1230 Vienna (AT)
(72) Inventor: KOFLER, Robert, 1230 Vienna (AT); STEINDL, Franz, 1230 Vienna (AT); HARRINGER, Stefan, 1230 Vienna (AT)
(74) Representative: Sonn & Partner Patentanwälte

(57) **Abstract**

Secure cold storage medium (25) comprising a substrate having applied thereon:
at least one security feature,
a cryptographic private key (16a),
a cryptographic public key (16b) corresponding to said cryptographic private key,
a serial number (16c) different from the cryptographic public key (pubKeyA) and the cryptographic private key (privKeyA) and
an opaque layer covering the cryptographic private key (16a),
wherein the substrate has additionally applied thereon a verification code (16d) generated with a cryptographic hash function (H) from the cryptographic public key (16b) and the serial number (16c);
and method for producing the same.

## Description

The invention concerns a secure cold storage medium comprising a substrate having applied thereon: at least one security feature, a cryptographic private key, a cryptographic public key corresponding to said cryptographic private key, a serial number different from the cryptographic public key and the cryptographic private key and an opaque layer covering the cryptographic private key; and a method for producing a secure cold storage medium of the above-mentioned kind.

Such secure cold storage mediums are typically used as paper wallets for holding what is commonly referred to as cryptocurrencies. For the purpose of the present invention it suffices to assume that - from a technical perspective - a cryptographic private key is effectively used as a proof of ownership of thirteen assets associated therewith. Naturally, being purely information, the cryptographic private key - once known - can be easily copied and used to steal the associated assets by transferring them to a wallet controlled exclusively by the attacker. In this context, the purpose of cold storage mediums is to impede copying by physically restricting access to the cryptographic private key. The term "cold" means that the storage medium is physically separate from a computer network, which manages a ledger of the digital assets.

The type of cold storage mediums to which the present invention belongs is based on a graphical representation of the cryptographic private key. By avoiding an electronic representation (e.g. in an electronic memory of a personal computer or smart phone), an additional step of capturing and decoding/transcoding is required before the cryptographic private key can be put to use. Of course, the graphical representation in general is susceptible to optical replication (e.g. scanning or photographing). In order to avoid such replication, the graphical representation of the cryptographic private key is concealed. The concealing may for example be achieved with a scratch-off layer. Although this type of protection provides only for a single use, it has the advantage, that every exposure of the cryptographic private key can be detected, thereby signalling the possibility of existing copies and the consequent risk in transferring digital assets to the account accessible with the cryptographic private key.

As follows from the above, the security and ultimately the trust achieved by the cold storage medium of the present type critically depends on the non-existence of copies of the cryptographic private key created during its generation and before it was concealed. In practice, this comes down to whether the user trusts the producer of the cold storage medium to behave as expected (i.e. not keep any copy of the cryptographic private key or other information allowing for - even only statistical - interference to the cryptographic private key). Since the user will often not be in direct contact with the producer, the cold storage medium may include security features that make it harder for an illegitimate third-party to replace original cold storage mediums with manipulated ones somewhere in the distribution chain. Those security features may comprise off-line security features, which can be verified locally, e.g. a hologram or watermark, and online security features, where a connection to a central verification service is required, e.g. a registered serial number.

One example of a known cold storage medium is the product "bitcoin certificate" by Bitcoin Suisse AG, Switzerland. For this product (called "bill"), the cryptographic information is printed on synthetic polymer paper. Each bill is equipped with a hologram and a one-sided embossing. Finally, a unique fingerprint of each bill is on third in a publicly accessible register along with a transaction ID associated with the loading of the certificate. It is not disclosed, how the unique fingerprint is generated. The use of a transaction ID for authentication does only apply to pre-charged wallets. The attack vector against which this product is protecting is that someone withdraws the pre-charged credit from the certificate before the legitimate buyer of the certificate does so. Consequently, it suffices to protect the cryptographic private key.

For cold storage mediums that are sold without a pre-charged credit (i.e. no digital assets associated with the cryptographic private key), an additional attack vector has to be taken into consideration. Such cold storage mediums are typically used (at least) twice: the first time when transferring digital assets to the cold storage medium, and the second time when transferring digital assets away from the cold storage medium. The first time, the cryptographic private key can remain concealed and unknown. Only knowledge of an associated cryptographic public key (or equivalent, such as an associated address) is required. An attacker may replace the cryptographic public key of the cold storage medium to redirect any intended transfers to an address accessible with a cryptographic private key known to the attacker.

It is an object of the present invention to provide protection against the additional attack vector explained above.

The invention proposes a cold storage medium of the kind stated in the outset, wherein the substrate has additionally applied thereon a verification code generated with a cryptographic hash function from the cryptographic public key and the serial number. The verification code therefore allows off-line verification of the cryptographic public key (and the serial number). In addition, the verification code can be used immediately for online verification, e.g. against a public register of valid verification codes. Compared to a cryptographic hash function from only the cryptographic public key, the verification code comprises the serial number as a cryptographic salt available to the legitimate owner of the cold storage medium. Without such a cryptographic salt, the public register could be misused for brute force attacks on cold storage mediums by generating random cryptographic key pairs and testing the public key against the public register. Such a brute force attack could be significantly more efficient than testing against a public ledger. Of course, the cryptographic hash function is not limited to only the cryptographic public key and the serial number but may comprise additional information - preferably off-line - available to the legitimate owner of the cold storage medium. An attacker is seeking to replace the cryptographic public key would need to also replace the verification code. This makes the likelihood extremely small that minor modifications of their respective graphical representations (e.g. replacing only a few or even a single character such as "6" for "8"), which are potentially easier to accomplish than replacing the entire cryptographic public key, would yield a combination of cryptographic public key and verification code that could pass an off-line verification.

In preferred embodiment, the verification code comprises a digital signature generated with the cryptographic private key. The signature proves that the person providing the verification code was in possession of a cryptographic private key corresponding to the cryptographic public key of the cold storage medium. This basically excludes vandalism attacks where an arbitrary - simple - modification to the cryptographic public key is performed and the verification code is modified to match the faulty cryptographic public key (or vice versa, depending what is easier to modify) or at least renders such attacks significantly more expensive.

Advantageously, the verification code is encoded in a machine-readable format, in particular as a one-dimensional barcode or a two-dimensional barcode. Such formats or encodings are easy and robust to read out using an electronic device having a camera (e.g. a smartphone) for online or off-line verification.

Correspondingly and with similar advantages, the invention proposes a method for producing a secure cold storage medium, the method comprising the following steps: generating an asymmetric key pair comprising a cryptographic private key and a cryptographic public key; generating a serial number, wherein the serial number is at least partially random; generating a verification code by applying a cryptographic hash function to the cryptographic public key and the serial number; applying the cryptographic private key, the cryptographic public key, the serial number and the verification code on a substrate comprising at least one security feature; covering the cryptographic private key applied on the substrate with an opaque layer; and deleting all electronically stored copies of the cryptographic private key.

Preferably, the present method comprises, before covering the cryptographic private key performing a visual verification: reading out from the substrate the cryptographic private key and the cryptographic public key applied on the substrate using an optical sensor, comparing the read-out cryptographic private key and the read-out cryptographic public key with their respective generated counterparts, and verifying the read-out cryptographic private key and the read-out cryptographic public key for their cryptographic correspondence, wherein the substrate is withdrawn for shredding if any of the comparisons finds a difference or if the verification fails. The visual verification ensures that no divergence between the cryptographic private key and the cryptographic public key can be introduced by accident or purposefully.

The method may further comprise recording the verification code in a first database after the visual verification only if both comparisons find equality and if the verification succeeds. The first database can preferably be a publicly (read-only) accessible database. The collection of recorded verification codes can effectively be used as a white list for online verification of issued cold storage mediums. The fact that the first database comprises only verification codes, which do not allow for the construction of the underlying cryptographic public keys, ensures that brute force attacks are not facilitated (as explained above) and also conserves the privacy of users of the cold storage mediums because their access to the database transmitting a particular verification code cannot be linked to transactions of digital assets.

Advantageously, the present method may further comprise recording at least one member selected from a group consisting of a cryptographic hash of the cryptographic private key, a cryptographic hash of the cryptographic public key, a cryptographic hash of a combination of the cryptographic public key and the serial number and a digital signature by the cryptographic private key of a combination of the cryptographic public key and the serial number in a second database before the applying step. The second database would be a purely private database without public access. It can serve that function as a preliminary white list of semi-finished cold storage mediums. Specifically, a valid entry in the second database can be used as a condition before recording a corresponding verification code in the first database toward the end of the production. Together with a means for emptying the preliminary white list upon detection of breach of access to the production facility, it can be avoided that manipulated or infiltrated cold storage mediums are recorded in the first database.

To further improve security of the present production method, it may comprise verifying the at least one security feature of the substrate and performing the applying the cryptographic private key, the cryptographic public key, the serial number and the verification code only if the verification succeeds. In this way, a strict one-to-one relationship between valid substrates and validly produced cold storage mediums can be ensured. For example, it can be avoided that invalid substrates processed to produce a validly registered cold storage medium, which would detriment trust in the credibility of the security features.

In one particularly preferred embodiment of the present invention, the cryptographic private key, the cryptographic public key, the serial number and the verification code are applied on the substrate by laser engraving. Thereby, it can be ensured that the relevant information will be reliably stored and will not be lost by whitening or peeling. Other alternatives for applying all or parts of the above-mentioned information on the substrate are by printing, writing, stamping or punching.

Preferably, all steps of the present method are performed in a locked and screened environment in the absence of witnesses. These circumstances can be monitored by suitable sensors, wherein breach of the secure conditions would be reported and lead to a discarding of all unfinished cold storage mediums.

Referring now to the drawings, wherein the figures are for purposes of illustrating the present invention and not for purposes of limiting the same,
fig. 1 schematically shows a flowchart of a method for producing a cold storage medium according to the present invention; and
fig. 2 schematically shows a flowchart of a method for authenticating a secure cold storage medium according to the present invention using a mobile electronic user device.

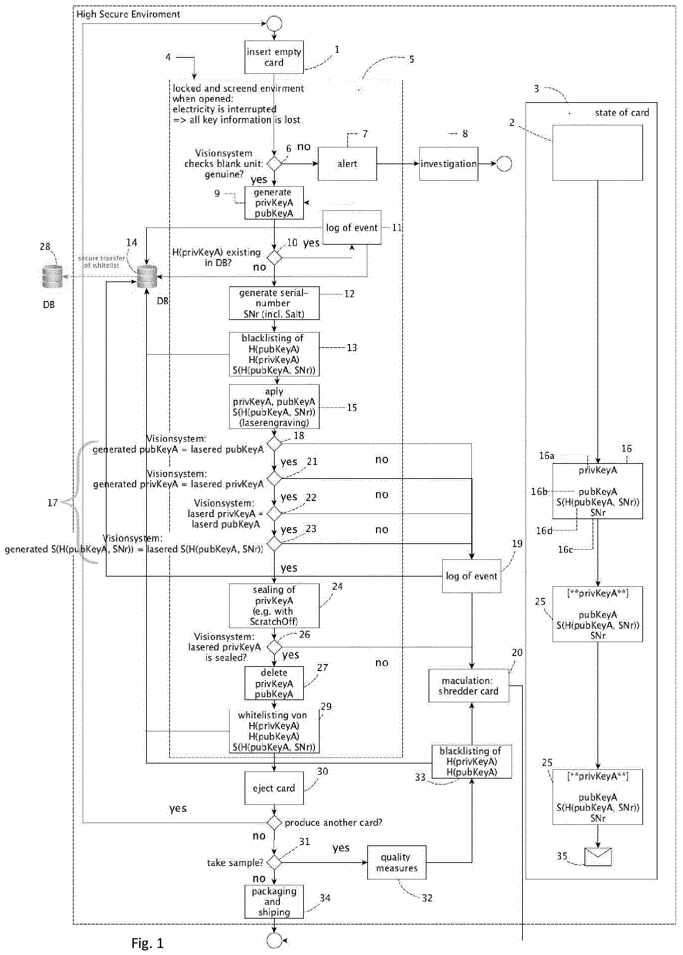

The method shown in fig. 1 starts out with supplying 1 an empty substrate 2 comprising at least one security feature. The empty substrate 2 is card-shaped, as indicated on the sub-chart 3 on the right-hand side of flowchart 4. This sub-chart 3 serves to schematically illustrate the status of the (generally unfinished) cold storage medium during production.

The following steps are all performed in a locked and screened environment in the absence of witnesses, i.e. a secure environment. This secure environment is indicated in the flowchart by a rectangle 5 enclosing the steps carried out inside the secure environment.

The first step inside the secure environment is verifying 6 the at least one security feature of the supplied substrate. If the verification fails, an alarm 7 is triggered to indicate an attempt of smuggling in an invalid substrate. The alarm 7 should trigger further investigations 8 as to the origin of the invalid substrate and how the supply chain of empty substrates could have been infiltrated.

If the verification succeeds, the method proceeds with generating 9 an asymmetric key pair comprising a cryptographic private key and a cryptographic public key. Subsequently, and mainly to avoid duplicates due to misconfiguration, it may be verified 10, whether a cryptographic hash of the generated cryptographic private key already exists in a database of all previously generated cryptographic hashes of generated cryptographic private keys. If the verification determines a duplicate, the event is recorded 11 and another asymmetric key pair is generated. If the verified cryptographic hash is unique, the method proceeds with generating 12 a serial number, wherein the serial number is at least partially random and different from the cryptographic public key and the cryptographic private key.

The next step once the serial number is available is generating a verification code by applying a cryptographic hash function to the cryptographic public key and the serial number and signing the result with the cryptographic private key to produce a sign cryptographic hash. At this point the complete information of the finished cold storage medium is available. For securing the integrity of the production line for the duration of the following production steps, a cryptographic hash of the cryptographic private key, a cryptographic hash of the cryptographic public key and a digital signature by the cryptographic private key of a combination of the cryptographic public key and the serial number are recorded 13 in a second database 14 serving as a preliminary white list.

Thereafter, production is resumed by applying 15 the cryptographic private key, the cryptographic public key, the serial number and the verification code on the substrate by laser engraving. The verification code is applied in the form of a graphical representation encoded as a two-dimensional barcode. At this point, the complete information is present on the cold storage medium 16 as indicated in the right-hand sub-chart 3. Specifically, the unfinished cold storage medium 16 comprises a substrate having applied thereon: at least one security feature (from the supplied empty substrate 2), a cryptographic private key 16a "privKeyA", a cryptographic public key 16b "pubKeyA" corresponding to said cryptographic private key, a serial number 16c "SNr" different from the cryptographic public key and the cryptographic private key and a verification code 16d "S(H(pubKeyA,SNr))" generated with a cryptographic hash function from the cryptographic public key and the serial number and comprising a digital signature generated with the cryptographic private key.

Next, the method continues with a visual verification 17 performed by a vision system. That visual verification 17 begins by reading out from the substrate the cryptographic public key applied on the substrate using an optical sensor and comparing 18 the read-out cryptographic public key with the generated cryptographic public key. If the comparison finds inequality, a discard procedure is triggered. The discard procedure includes recording 19 the trigger event (in this case divergence between generated and applied cryptographic public key) in the second database 14, withdrawing the cold storage medium 16 from production and shredding 20 the substrate/the cold storage medium 16.

If the comparison finds equality, the visual verification 17 continues by reading out from the substrate the cryptographic private key applied on the substrate using an optical sensor and comparing 21 the read-out cryptographic private key with the generated cryptographic private key. If the comparison finds inequality, the above-described discard procedure is triggered. In the same manner, the visual verification comprises verifying 22 the read-out cryptographic private key and the read-out cryptographic public key for their cryptographic correspondence (i.e. the cryptographic public key is an asymmetric counterpart of the cryptographic private key) and reading out from the substrate the verification code applied thereon and comparing 23 the read-out verification code with the verification code computed from the generated cryptographic public key and serial number. Again, any inequality found during the visual verification triggers the above-mentioned discard procedure leading to the destruction of the cold storage medium 16.

When the visual verification 17 is completed without any inequality found, production proceeds by covering 24 the cryptographic private key applied on the substrate with an opaque layer, e.g. a scratch-off material. At this point, the previously unfinished cold storage medium 16 becomes a - potentially finished (i.e. conditional to the following verification steps) - secure cold storage medium 25 further comprising an opaque layer covering the cryptographic private key. The concealment of the cryptographic private key is indicated in the right-hand sub-chart 3.

Thereafter, the method comprises verifying 26 visually (using the same vision system as the visual verification 17 described above) that the cryptographic private key is indeed concealed and unreadable. If this is not the case, the above-mentioned discard procedure is entered.

Otherwise, i.e. if the concealment of the cryptographic private key is successfully verified, the method continues by recording 27 the verification code together with a cryptographic hash of the cryptographic private key and a cryptographic hash of the cryptographic public key in the second database 14 from where this information is securely transmitted to a publicly accessible first database 28 if the card information is found on the preliminary white list. Thereafter, all electronically stored copies of the cryptographic private key and also of the cryptographic public key are securely deleted 29 before the secure cold storage medium 25 leaves the secure environment.

At the exit 30 of the secure environment, the method may comprise drawing 31 of samples. Those samples are analysed 32 for validity and authenticity before blacklisting 33 a cryptographic hash of the cryptographic private key and a cryptographic hash of the cryptographic public key of the drawn samples and destroying 20 or shredding them.

Finally, the finished cold storage mediums 25 are packaged and dispatched 34, indicated by a letter symbol 35 in the right-hand sub-chart 3.

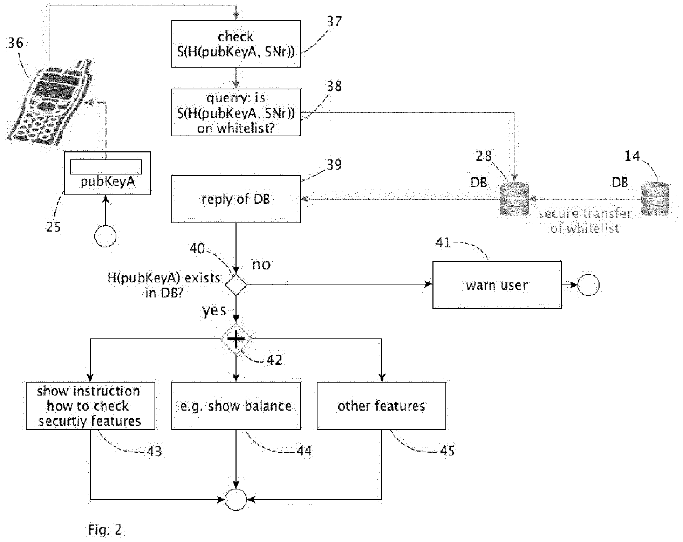

The method shown in fig. 2 starts out with capturing 36 a cryptographic public key, a serial number and a verification code visible on the secure cold storage medium 25. With this information, it is verified 37 that the verification code comprises a cryptographic hash of the cryptographic public key and the serial number, which is signed with a cryptographic private key corresponding to the cryptographic public key. This verification does not need access to the cryptographic private key but can be performed with sole knowledge of the cryptographic public key and the cryptographic hash function used to generate the verification code. Thereafter, the authentication continues by querying 38 whether the verification code is registered in the first database 28. After receiving 39 the query result 40 from the first database 28, upon a negative answer, the mobile electronic user device signals 41 a warning to the user. Otherwise, i.e. upon a positive answer, the user of the mobile electronic user device can be given the choice 42 to display instructions 43 for further visual authentication of the secure cold storage medium (e.g. a hologram), display a balance 44 of digital assets associated with the secure cold storage medium, or other options 45.

## Claims

1. Secure cold storage medium (25) comprising a substrate having applied thereon:
at least one security feature,
a cryptographic private key (16a),
a cryptographic public key (16b) corresponding to said cryptographic private key,
a serial number (16c) different from the cryptographic public key (pubKeyA) and the cryptographic private key (privKeyA) and
an opaque layer covering the cryptographic private key (16a),
**characterized in that** the substrate has additionally applied thereon a verification code (16d) generated with a cryptographic hash function (H) from the cryptographic public key (16b) and the serial number (16c).

2. Secure cold storage medium (25) according to claim 1, **characterized in that** the verification code (16d) comprises a digital signature (S) generated with the cryptographic private key.

3. Secure cold storage medium (25) according to claim 1 or 2, **characterized in that** the verification code (16d) is encoded in a machine-readable format, in particular as a one-dimensional barcode or a two-dimensional barcode.

4. Method for producing a secure cold storage medium (25), the method comprising the following steps:
generating (9) an asymmetric key pair comprising a cryptographic private key and a cryptographic public key;
generating (12) a serial number, wherein the serial number is at least partially random;
generating a verification code by applying a cryptographic hash function (H) to the cryptographic public key and the serial number;
applying (15) the cryptographic private key, the cryptographic public key, the serial number and the verification code on a substrate comprising at least one security feature;
covering (24) the cryptographic private key applied on the substrate with an opaque layer; and
deleting (29) all electronically stored copies of the cryptographic private key.

5. Method according to claim 4, **characterised in that** before covering (24) the cryptographic private key performing a visual verification (17) comprising:
reading out from the substrate the cryptographic private key and the cryptographic public key applied on the substrate using an optical sensor,
comparing (18, 21) the read-out cryptographic private key and the read-out cryptographic public key with their respective generated counterparts, and
verifying (22) the read-out cryptographic private key and the read-out cryptographic public key for their cryptographic correspondence,
wherein the substrate is withdrawn for shredding (20) if any of the comparisons finds a difference or if the verification fails.

6. Method according to claim 5, **characterised by**:
recording (27) the verification code in a first database (28) after the visual verification (17) only if both comparisons find equality and if the verification succeeds.

7. Method according to one of claims 4 to 6, **characterised by**:
recording (13) at least one member selected from a group consisting of a cryptographic hash of the cryptographic private key, a cryptographic hash of the cryptographic public key, a cryptographic hash of a combination of the cryptographic public key and the serial number and a digital signature by the cryptographic private key of a combination of the cryptographic public key and the serial number in a second database (14) before the applying (15) step.

8. Method according to one of claims 4 to 7, **characterized by**:
verifying (6) the at least one security feature of the substrate and performing the applying (15) the cryptographic private key, the cryptographic public key, the serial number and the verification code only if the verification succeeds.

9. Method according to one of claims 4 to 8, **characterized in that** the cryptographic private key, the cryptographic public key, the serial number and the verification code are applied on the substrate by laser engraving.

10. Method according to one of claims 4 to 9, **characterized in that** all steps are performed in a locked and screened environment in the absence of witnesses.
